# EUROPEAN PATENT APPLICATION

(11) **EP 4 535 588 A1**
(43) Date of publication of application: **09.04.2025**
(21) Application number: 24202066.7
(22) Date of filing: 23.09.2024
(51) Int. Cl.: H02H 9/00

(54) **AUTO-DISCHARGE FOR CAPACITIVE DEVICES**

(30) Priority: 22.09.2023 US 202318371807
(71) Applicant: Hamilton Sundstrand Corporation, Charlotte, NC 28217-4578 (US)
(72) Inventor: AVRITCH, Steven A., Bantam, CT 06750 (US); WILSON, Michael A., Scottsdale, AZ 85251 (US); TROTMAN, Alexander, Granby, CT 06035 (US)
(74) Representative: Dehns

(57) **Abstract**

A capacitive system includes a module circuit card assembly including a first modular keying and alignment mechanism and a second modular keying and alignment mechanism. The first and second modular keying and alignment mechanisms are configured for mechanical alignment and electrical connection with a backplane circuit card assembly (CCA). A capacitor is mounted to the module circuit card assembly and is electrically connected to each of the first and second modular keying and alignment mechanisms through a charge/discharge circuit. The circuit is configured to: charge the capacitor with the module circuit card assembly connected to the backplane CCA, discharge the capacitor with the module circuit card assembly connected to the backplane CCA for proving backup power to the backplane CCA, and discharge the capacitor through a bleed resistor of the circuit upon disconnection of the module circuit card assembly from the backplane CCA.

## Description

### BACKGROUND

### 1. Field

The present disclosure relates to energy storing capacitive devices, and more particularly to safely discharging energy storing capacitive devices such as holdup capacitors used in aircraft avionic computer systems.

### 2. Description of Related Art

Charged hold-up capacitive devices can present a shock hazard to technicians handling a computer's internal modules during assembly, repair, and the like. Traditional configurations require the operator to manually discharge the capacitors during initial handling, e.g. with a jumper, or else bleed resistors were incorporated into the design which would slowly discharge the energy. The manual method is prone to human error, e.g. if the operator forgets to discharge the capacitor(s). The bleed resistor method is not ideal because the bleed resistor is always parasitically dissipating power and it can take an extended period of time to fully bleed the energy to a safe level. Additionally, only certain aircraft require internal holdup in their avionics computers, which presents the need for modular holdup solutions when designing a single avionics computer for use in multiple aircraft.

The conventional techniques have been considered satisfactory for their intended purpose. However, there is an ever present need for improved systems and methods for discharging capacitive devices. This disclosure provides a solution for this need.

### SUMMARY

A capacitive system includes a module circuit card assembly including a first modular keying and alignment mechanism and a second modular keying and alignment mechanism. The first and second modular keying and alignment mechanisms are configured for mechanical alignment and electrical connection with a backplane circuit card assembly (CCA). A capacitor is mounted to the module circuit card assembly and is electrically connected to each of the first and second modular keying and alignment mechanisms through a charge/discharge circuit. The circuit is configured to: charge the capacitor with the module circuit card assembly connected to the backplane CCA, discharge the capacitor with the module circuit card assembly connected to the backplane CCA for proving holdup voltage, and discharge the capacitor through a bleed resistor of the circuit upon disconnection of the module circuit card assembly from the backplane CCA.

The module circuit card assembly can include a printed circuit board (PCB), wherein the holdup capacitor is mounted to the PCB. The circuit can include printed traces of the PCB. The circuit can include a ground node electrically connected to the first modular keying and alignment mechanism. A holdup connector can be mounted to the module circuit card assembly and is electrically connected to a Vcap node of the circuit. The capacitor can be connected to the Vcap node and to the ground node. The first and second modular keying and alignment mechanisms can each include a respective guide socket configured to manually guide the module circuit card assembly into position on the backplane CCA. The respective guide sockets can each be configured to electrically connect ground from the backplane CCA to the circuit.

A bleed resistor can be connected to the Vcap node. The bleed resistor can be connected to a switch that is connected to the ground node. The switch can be operative in a first state to disconnect the bleed resistor from the ground node with the module circuit card assembly connected to the backplane CCA. The switch can be operative in a second state to connect the bleed resistor to the ground node with the module circuit card assembly disconnected from the backplane CCA. The switch can be a solid state switch including a control connection operatively connected to the circuit to control state of the switch. The control connection of the switch can be connected to a Vpin node of the circuit.

A local voltage regulator (LVR) can be connected to the Vcap node. A sense resistor can connect between the LVR and the Vpin node. The Vpin node can be electrically connected to the second modular keying and alignment mechanism of the module circuit card assembly, configured to be connected to ground with the module circuit card assembly connected to the backplane CCA for commanding the switch to disconnect the bleed resistor from the ground node. The LVR can be configured to regulate voltage at a Vcc node that connects the LVR to the sense resistor for pulling up voltage at the Vpin node from ground voltage to the voltage of the Vcc node through the sense resistor to command the switch to connect the bleed resistor to the ground node to discharge the capacitor.

A method includes charging a capacitor in a circuit card assembly (CCA) connected to a backplane CCA. The method includes discharging the capacitor as needed to provide hold up voltage from the capacitor to an avionics system. The method includes maintaining a bleed resistor of the CCA electrically disconnected from the capacitor as long as the CCA is connected to the backplane CCA. The method includes detecting disconnection of the CCA from the backplane CCA and connecting the bleed resistor to the capacitor to discharge the capacitor through the bleed resistor upon the detecting disconnection of the CCA from the backplane CCA. Detecting disconnection of the CCA from the backplane CCA can include pulling up voltage on circuit node upon disconnection of the circuit node from ground to command a switch to connect the bleed resistor to the capacitor.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

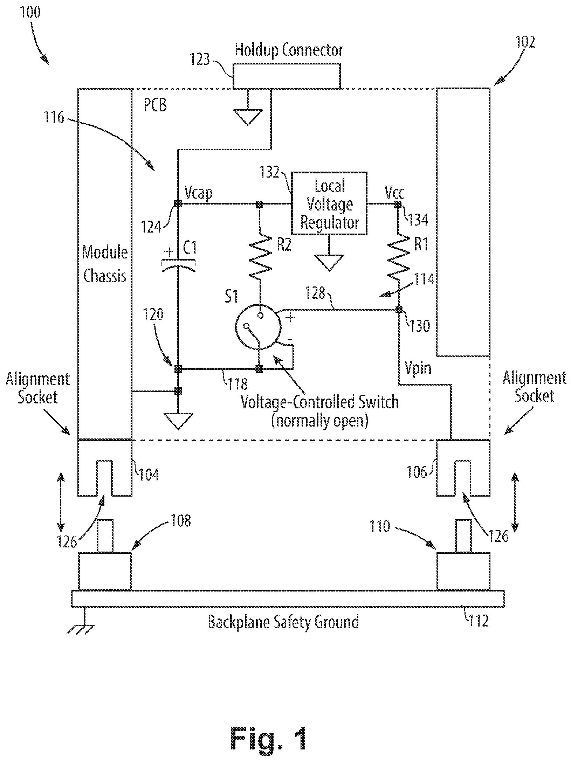

Fig. 1 is a schematic view of an embodiment of a capacitive system constructed in accordance with the present disclosure, showing the switch, the local voltage regulator, and bleed resistor.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a capacitive system in accordance with the disclosure is shown in Fig. 1 and is designated generally by reference character 100. The systems and methods described herein can be used to automatically discharge hold up capacitors without the traditional parasitic losses from bleed resistors.

The capacitive system 100, e.g. a circuit card assembly (CCA), includes a module circuit card assembly 102 including a first modular keying and alignment mechanism 104 and a second modular keying and alignment mechanism 106. The first and second modular keying and alignment mechanisms 104, 106 are configured for mechanical alignment and electrical connection with modular keying pins 108, 110 and a backplane circuit card assembly (CCA) 112. A holdup capacitor C1 is mounted to the module circuit card assembly 102 and is electrically connected to each of the first and second modular keying and alignment mechanisms 104, 106 through a charge/discharge circuit 114. The circuit 114 is configured to: charge the capacitor C1 via energy supplied via holdup connector 123 when the module circuit card assembly 102 is connected to the backplane circuit card assembly 112. Conversely, the charge/discharge circuit 114 is configured to discharge the capacitor C1 through a bleed resistor R2 when the module circuit card assembly 102 is disconnected from the backplane circuit card assembly 112. The first and second modular keying and alignment mechanisms 104, 106 each include a respective guide socket 126 configured to manually guide the module circuit card assembly 102 into position on the respective backplane modular keying and alignment mechanism pin 108 and 110.

The module circuit card assembly 102 includes a printed circuit board (PCB) 116, wherein the holdup capacitor C1 is mounted to the PCB 116. The charge/discharge circuit 114 includes printed traces 118 of the PCB 116. The circuit 114 includes a ground node 120 electrically connected to the first modular keying and alignment mechanisms guide socket 104. A holdup connector 123 is mounted to the module circuit card assembly 102 and is electrically connected to a Vcap node 124 of the charge/discharge circuit 114 to connect the module circuit card assembly 102 to a power source or the like for normal charging of the capacitor C1. The capacitor C1 is connected to the Vcap node 124 and to the ground node 120, i.e. between the nodes 120, 124. The respective modular keying and alignment mechanism guide sockets 126 are each configured to electrically connect ground from the backplane circuit card assembly 112 to the circuit 114.

A bleed resistor R2 is connected to the Vcap node 124. The bleed resistor R2 is connected to a switch S1 that is connected to the ground node 120. The switch S1 is operative in a first state to disconnect the bleed resistor R2 from the ground node, operatively disconnecting the bleed resistor R2 from the capacitor C1 so there is no parasitic loss, as long as the module circuit card assembly 102 is connected to the backplane circuit card assembly 112. The switch S1 is operative in a second state to connect the bleed resistor R2 to the ground node 120, operatively connecting the bleed resistor R2 to the capacitor C1 to discharge the capacitor C1, with the module circuit card assembly 102 disconnected from the backplane circuit card assembly 112. The switch S1 is a solid state switch, such as a FET, including a control connection 128 which operates the switch to an open state when control connection Vpin 128 is grounded and a closed state when control connection Vpin 128 is not grounded. The control connection 128 is operatively connected to the circuit 114 to control state of the switch S1. The control connection 128 of the switch is connected to a Vpin node 130 of the circuit 114.

A local voltage regulator (LVR) 132 is connected to the Vcap node 124. A pull-up resistor R1 connects between the LVR 132 and the Vpin node 130. The Vpin node 130 is electrically connected to the second connector 106 of the module circuit card assembly 102, configured to be connected to ground with the module circuit card assembly 102 connected to the backplane CCA 112 for commanding the switch S1 to disconnect the bleed resistor R2 from the ground node 120. The LVR 132 is configured to regulate voltage at a Vcc node 134 that connects the LVR 132 to the sense resistor R1 for pulling up voltage at the Vpin node 130 from ground voltage to the voltage of the Vcc node 134 through the sense resistor R1, which commands the switch S1 to connect the bleed resistor R2 to the ground node 120 to discharge the capacitor C1. Note that the ground node 120 is not grounded once the module circuit card assembly 102 is disconnected from the backplane circuit card assembly 112

A method includes charging a capacitor C1 in a circuit card assembly (CCA) connected to a backplane circuit card assembly 112. The method includes discharging the capacitor C1 as needed to provide hold up voltage from the capacitor C1 to an avionics system of the like. The method includes maintaining a bleed resistor R2 of the CCA electrically disconnected from the capacitor C1 as long as the CCA is connected to the backplane circuit card assembly 112. The method includes detecting disconnection of the CCA from the backplane circuit card assembly 112 and connecting the bleed resistor R2 to the capacitor C1 to discharge the capacitor C1 through the bleed resistor R2 upon the detecting disconnection of the CCA from the backplane circuit card assembly 112. Detecting disconnection of the CCA from the backplane circuit card assembly 112 can include pulling up voltage on circuit node 130 upon disconnection of the circuit node 130 from ground to command a switch S1 to connect the bleed resistor R2 to the capacitor C1.

Systems and methods as disclosed herein provide potential benefits including the following. This disclosure presents a novel and improved modular method for discharging hold-up capacitors that does not rely on a manual operation, such as jumpers, and also does not dissipate energy during normal operation like a traditional bleed resistor does. The systems and methods described here-in are directly applicable to VPX (VITA46 and VITA48.2) type modules, however, they can be applied to other types of industry standard modules. VPX is a mechanical standard for plug-in module keying, dimensional requirements, which in this case pertains to the alignment pins. Systems and methods as disclosed herein result in reduced non-recurring costs for new aircraft installations, reduced recurring costs for aircraft not requiring internal holdup, reduced weight for aircraft not requiring internal holdup. The resistor R2 can be a lower ohmage than traditional bleed resistors because S1 opens while charging the capacitor C1 resulting in no current flow through R2 while system 100 is installed, and the lower ohmage resistor provides faster discharge.

The methods and systems of the present disclosure, as described above and shown in the drawings, provide for automatic discharge of hold up capacitors without the traditional parasitic losses from bleed resistors. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A capacitive system comprising:
a module circuit card assembly (102) including a first modular keying and alignment mechanism and a second modular keying and alignment mechanism, wherein the first and second modular keying and alignment mechanisms are configured for mechanical alignment and electrical connection with a backplane circuit card assembly "CCA";
a holdup capacitor mounted to the module circuit card assembly (102) and electrically connected to each of the first and second modular keying and alignment mechanisms through a charge/discharge circuit that includes:
a bleed resistor;
a voltage-controlled switch that selectively connects the bleed resistor across the holdup capacitor in response to the module circuit card assembly (102) being disconnected from the backplane CCA.

2. The capacitive system as recited in claim 1, wherein the first modular keying and alignment mechanism includes a first guide socket configured to electrically connect to a first modular keying pin of the backplane CCA.

3. The capacitive system as recited in claim 2, wherein the second modular keying and alignment mechanism includes a second guide socket configured to electrically connect to a second modular keying pin of the backplane CCA.

4. The capacitive system as recited in any of claims 1-3, wherein the first and second modular keying pins of the backplane CCA are conductively coupled to one another.

5. The capacitive system as recited in any of claims 1-4, wherein the holdup capacitor is connected to the Vcap node and to the ground node.

6. The capacitive system as recited in any of claim 1-5, wherein one of the first and second modular keying and alignment mechanisms is grounded.

7. The capacitive system as recited in any of claims 1-6, wherein the voltage-controlled switch is a transistor.

8. The capacitive system as recited in any of claims 1-7, wherein the voltage-controlled switch is operative in a first state to disconnect the bleed resistor from the ground node in response to the module circuit card assembly (102) being connected to the backplane CCA.

9. The capacitive system as recited in any of claims 1-8, wherein the voltage-controlled switch is operative in a second state to connect the bleed resistor to the ground node in response to the module circuit card assembly (102) being disconnected from the backplane CCA.

10. The capacitive system as recited in claim 5, further comprising:
a local voltage regulator "LVR" connected to the Vcap node.

11. The capacitive system as recited in claim 6, wherein a Vpin node is electrically connected to a control pin of the voltage-controlled switch and to one of the first and second modular keying and alignment mechanisms not grounded.

12. The system as recited in claim 11, wherein the LVR is configured to regulate voltage at a Vcc node that connects the LVR to a sense resistor for pulling up voltage at the Vpin node from ground voltage to the voltage of the Vcc node through the sense resistor to command the switch to connect the bleed resistor to the ground node to discharge the capacitor.

13. The system as recited in any preceding claim, wherein the first and second modular keying and alignment mechanisms each include a respective guide socket configured to manually guide the module circuit card assembly (102) into position on the backplane CCA.

14. A method comprising:
charging a capacitor in a circuit card assembly "CCA" connected to a backplane CCA;
discharging the capacitor as needed to provide hold up voltage from the capacitor to an avionics system;
maintaining a bleed resistor of the CCA electrically disconnected from the capacitor as long as the CCA is connected to the backplane CCA;
detecting disconnection of the CCA from the backplane CCA; and
connecting the bleed resistor to the capacitor to discharge the capacitor through the bleed resistor upon the detecting disconnection of the CCA from the backplane CCA.

15. The method as recited in claim 14, wherein detecting disconnection of the CCA from the backplane CCA includes pulling up voltage on circuit node upon disconnection of the circuit node from ground to command a switch to connect the bleed resistor to the capacitor.
